Europäisches Patentamt

European Patent Office

Office européen des brevets

(11) Numéro de publication: **0 029 759**
**A1**

# (12) DEMANDE DE BREVET EUROPEEN

(21) Numéro de dépôt: **80401491.8**

(22) Date de dépôt: **21.10.80**

(51) Int. Cl.³: **C 03 C 25/02**
C 03 B 37/07, G 01 B 11/00
G 02 B 7/26

(30) Priorité: **16.11.79 FR 7928307**

(43) Date de publication de la demande:
**03.06.81 Bulletin 81/22**

(84) Etats Contractants Désignés:
**AT BE CH DE GB IT LI NL**

(71) Demandeur: **LIGNES TELEGRAPHIQUES ET TELEPHONIQUES Société anonyme**
**1 Rue Charles Bourseul**
**F-78702 Conflans-Ste Honorine(FR)**

(72) Inventeur: **Dubos, Jacques**
**"THOMSON-CSF" SCPI 173, Bld Haussmann**
**F-75360 Paris Cedex 08(FR)**

(72) Inventeur: **Faure, Michel**
**"THOMSON-CSF" SCPI 173, Bld Haussmann**
**F-75360 Paris Cedex 08(FR)**

(72) Inventeur: **Lumineau, Yves**
**"THOMSON-CSF" SCPI 173, Bld Haussmann**
**F-75360 Paris Cedex 08(FR)**

(74) Mandataire: **Giraud, Pierre et al,**
**"THOMSON-CSF" - SCPI 173, bld Haussmann**
**F-75360 Paris Cedex 08(FR)**

(54) **Procédé de centrage automatique d'une fibre optique dans un revêtement de protection primaire, et dispositif utilisé pour la mise en oeuvre de ce procédé.**

(57) L'invention a pour but d'assurer, par une régulation automatique, un centrage aussi parfait que possible d'une fibre optique dans son revêtement primaire dit d'enduction, appliqué en cours de tirage afin d'optimiser ses propriétés mécaniques.

A cet effect, on asservit la position du dispositif d'enduction (4) à la position de la fibre par rapport à un point d'origine (0) déterminé par des moyens opto-électroniques (3), des moyens électroniques et électromécaniques assurant à chaque instant le maintien de l'extrémité de la filière d'enduction (41) au point (0') situé à ce niveau sur la droite (OR) joignant le point origine au premier point de contact de la fibre avec la poulie (2) de guidage vers les moyens de stockage (S) de la fibre.

Applications aux fibres devant être cablées pour constituer un câble optique de télécommunications.

./...

FIG.1

1

## PROCEDE DE CENTRAGE AUTOMATIQUE D'UNE FIBRE OPTIQUE DANS UN REVETEMENT DE PROTECTION PRIMAIRE, ET DISPOSITIF UTILISE POUR LA MISE EN OEUVRE DE CE PROCEDE

L'invention concerne un procédé de centrage automatique d'une fibre optique dans un revêtement de protection primaire ainsi que le dispositif utilisé pour la mise en oeuvre du procédé.

On sait qu'il est nécessaire, au cours même du tirage d'une fibre optique à partir d'une préforme de verre, de recouvrir la fibre d'un revêtement permettant de conserver les propriétés mécaniques de la fibre et d'obtenir pour la fibre ainsi revêtue une grande résistance à la traction, utile pour les opérations de confection des câbles à fibres optiques. Ce revêtement primaire, appelé ci-après "enduction", est de deux types :

- soit une enduction "fine", typiquement d'épaisseur inférieure à 4 ou 5 microns ;

- soit une enduction dite "épaisse", avec une épaisseur supérieure à dix microns.

Alors que le premier type d'enduction (fine) est intéressante par le fait que l'on peut effectuer la jonction de deux fibres sans retirer le revêtement primaire, le deuxième type (épais) apporte à la fibre une meilleure protection et permet d'obtenir des résistances mécaniques notables, par exemple de 4 à 5 GN/m$^2$.

Un des problèmes les plus importants que l'on rencontre lorsqu'on réalise une enduction épaisse consiste à résoudre les difficultés posées par un centrage aussi parfait que possible, car un tel centrage conditionne largement les propriétés mécaniques de la fibre optique ainsi revêtue.

En effet, le problème se pose parce que la fibre tirée de la préforme, se déplace en cours de tirage pour les raisons suivantes.

Bien que la fibre soit guidée vers le tambour de stockage par une poulie de renvoi placée à la suite des dispositifs d'enduction et de traitement

2

par irradiation, on constate que cette fibre se déplace transversalement de quatre à cinq millimètres au niveau du point d'extraction de la préforme. Ces déplacement sont dûs aux irrégularités inévitables de la préforme.

Il est donc nécessaire de déplacer corrélativement le dispositif d'enduction pour assurer un bon centrage.

Des dispositifs de réglage manuels existent mais doivent être surveillés en permanence ce qui est fatigant, onéreux et peu efficace.

L'invention permet d'assurer la régulation automatique du centrage pour remédier aux divers inconvénients signalés plus haut.

A cet effet, le procédé de centrage automatique en cours de tirage d'une fibre optique dans un revêtement de protection, déposé par enduction à l'aide d'un dispositif traversé par la fibre sortant d'une préforme, dans lequel la position du dispositif d'enduction est asservie à la position de la fibre par rapport à un point d'origine est caractérisé en ce que le point d'origine est déterminé par des premiers moyens opto-électroniques contrôlant le centrage de la fibre dans son revêtement, en ce que des deuxièmes moyens opto-électroniques permettent de mesurer les coordonnées du déplacement de la fibre par rapport au point d'origine et en ce que des troisièmes moyens électroniques et électromécaniques utilisent ces coordonnées pour déplacer le dispositif d'enduction et assurer ainsi le centrage de la fibre.

L'invention sera mieux comprise, et d'autres caractéristiques apparaîtront au moyen de la descripotion qui suit et des dessins qui l'accompagnent, parmi lesquels :

La figure 1 est un schéma d'une partie des équipements d'une installation de tirage ;

la figure 2 représente schématiquement les moyens électroniques et électromécaniques utilisés pour mettre en oeuvre le procédé selon l'invention ;

la figure 3 est un schéma explicatif.

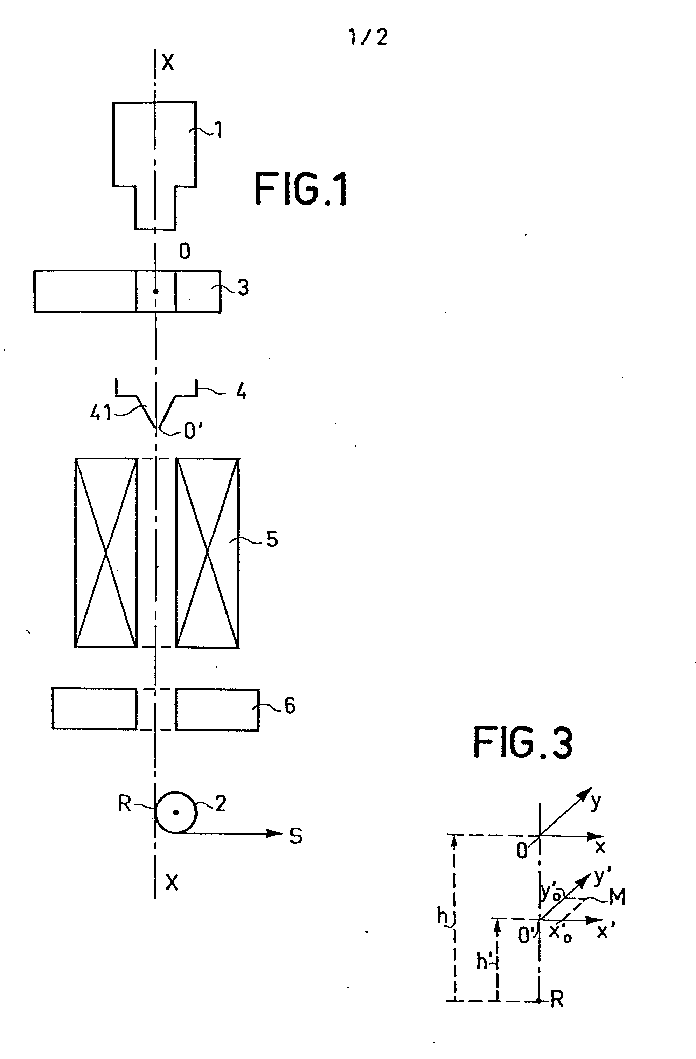

Dans l'exemple d'installation décrit et représenté figure 1, un four de tirage 1 est disposé à la partie supérieure de l'installation. On n'a pas représenté la préforme de verre placée dans le four ni la fibre qui en est extraite suivant un axe XX prolongeant l'axe du four 1 et de la préforme. Cette fibre, qui s'écarte plus ou moins de l'axe XX au cours du tirage, est renvoyée par une poulie 2 vers les moyens de stockage symbolisés par une simple flèche S.

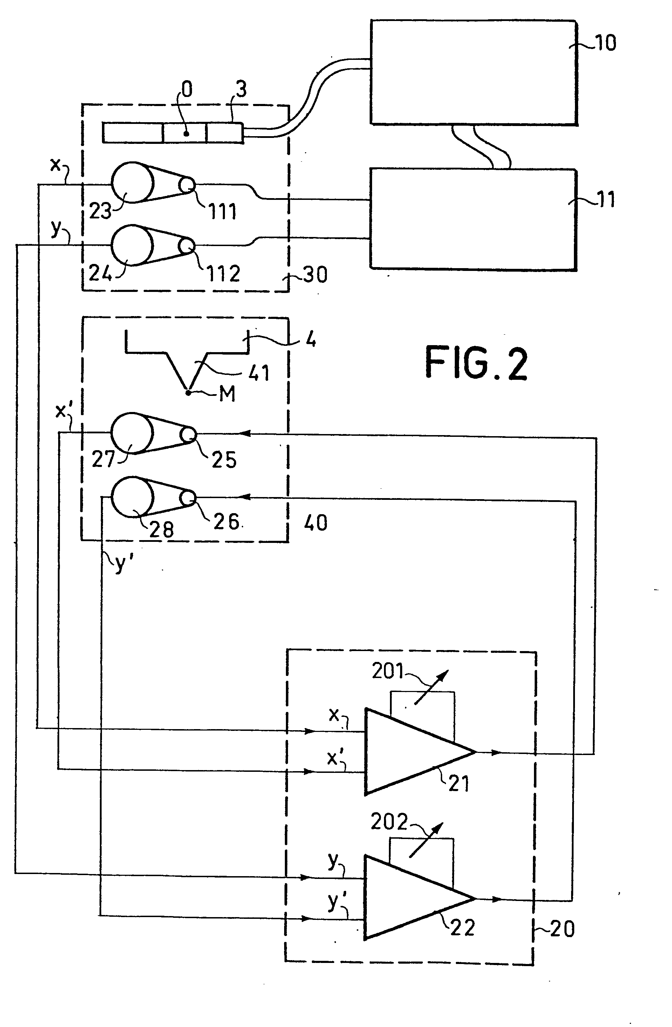

La poulie 2 est tangente en un point R à l'axe XX ; ce point est un point de passage obligé pour la fibre entre le four 1 et la poulie 2. Sur le trajet de la fibre entre le four et la poulie on trouve immédiatement à la sortie du four un équipement 3 de mesure de diamètre, de type classique mais complété par un système d'assertvissement qui sera décrit ultérieurement à propos de la figure 2. Le système d'asservissement a pour effet de maintenir constament l'équipement 3 dans une position telle que la fibre soit sur l'axe de mesure défini par l'équipement comportant notamment un laser et des moyens de balayage (effectué dans un plan) du faisceau émis par le laser. En effet, l'équipement de mesure de diamètre utilisé dans le cadre de l'invention est par exemple un appareil M 501 A de la firme ANRITSU ELECTRIC CO. LTD TOKYO, fournissant non seulement les écarts de diamètre par rapport à un diamètre prédéterminé mais également les écarts en x et en y de l'axe de la fibre par rapport au point de croisement du pinceau laser de balayage. Si on appelle 0 ce point de croisement, 0x un axe d'origine 0 dirigé dans le plan de balayage suivant la position moyenne du pinceau laser (figure 3) et 0y un axe horizontal perpendiculaire à 0x, le système d'asservissement ramène constamment le point 0 sur la fibre. Ainsi le point 0 n'est pas nécessairement positionné exactement sur xx.

A la sortie de l'équipement 3 sur l'axe xx, on trouve un bac d'enduction 4, muni d'une filière d'enduction 41 dont l'extrémité en forme de tronc de cône devrait être centrée sur un point 0' situé sur la droite 0R joignant le point 0 au point R de contact de la fibre avec la poulie 2. Des axes 0' x' et 0' y' ont été tracés parallèlement aux axes 0x et 0y mentionnés plus haut. Lorsque la fibre s'écarte du point 0 l'équipement 3 se déplace en ramenant son centre 0 sur la fibre. Le point de sortie de la filière se trouve alors en M de coordonnées $x'_0$ et $y'_0$ dans le plan 0x' y'. Les moyens mis en oeuvre dans le cadre de l'invention ont précisément pour but de ramener le point M au point 0' sur la droite 0R.

Figure 2, on a représenté schématiquement les moyens mis en oeuvre pour maintenir l'équipement de mesure 3 d'une part et d'autre part le dispositif d'enduction 4 centrés sur l'axe de la fibre optique à leur niveau respectif.

L'équipement 3 est associé à une armoire électronique 10 d'alimentation de contrôle et de lecture. Dans le cadre de l'invention, on trouve en outre, associée à l'armoire 10, une électronique d'asservissement 11 commandant à son tour les moteurs 111 et 112 assurant les déplacements respectifs en x et en y de la platine 30 qui supporte l'équipement 3. Cette platine est représentée par un simple trait tireté entourant l'équipement 3 et les moteurs 111 et 112. Ceux-ci sont actionnés de façon classique en fonction de consignes élaborées par l'ensemble électronique constitué par l'armoire 10 et l'électronique d'asservissement proprement dit 11.

En outre, les moteurs 111 et 112 entraînent des potentiomètres 23 et 24 qui assurent respectivement la "recopie" en x et en y de la position instantanée de la platine 30 c'est-à-dire du point de croisement des rayons laser. Les valeurs de résistances correspondant aux positions de ces potentiomètres sont insérées dans les entrées des amplificateurs 21 et 22 situés dans la partie 20 de l'équipement d'asservissement du dispositif d'enduction.

Les moyens électroniques et électromécaniques assurant à chaque instant la position correcte du dispositif d'enduction 4 comprennent :

- les amplificateurs opérationnels 21 et 22 déjà mentionnés ;

- des moteurs 25 et 26 de déplacement d'une platine 40 supportant le dispositif d'enduction, platine par ailleurs dotée de moyens de réglage manuels ;

- des potentiomètres de recopie 27 et 28 des coordonnées x' et y' du point de sortie M de la filière d'enduction 41.

Les résistances des potentiomètres 27 et 28 sont insérées dans les entrées en x' et y', respectivement, des amplificateurs 21 et 22 qui sont de type différentiel. En outre, ces amplificateurs comportent, dans une boucle de contre-réaction un potentiomètre 201, ou 202, selon le cas, servant à corriger les erreurs systèmatiques ou statiques du dispositif. Ces erreurs sont détectées en utilisant un dispositif de visualisation 6 placé sur le trajet de la fibre optique par exemple, figure 1, à la sortie du four 5 de traitement thermique, avant la poulie 2. Un tel dispositif de visualisation est décrit dans un article de H.M. PRESBY, intitulé "Geometrical Uniformity of Plastic Coating on Optical Fibres" sur un contrôle du revêtement primaire

des fibres optiques, article publié dans la revue "The Bell System Technical Journal" vol. 55 n° 10, Décembre 1976, pages 1525-1538. Le contrôle est effectué par observation des figures de diffraction d'un faisceau laser projeté sur la fibre. Toutefois, il est possible de corriger les erreurs systèmatiques de la boucle d'asservissement en effectuant un préréglage manuel, décrit plus loin.

La mise en service du precessus de centrage automatique s'effectue de la manière suivante :

On sait que, grâce à son système propre d'asservissement (armoire 10, électronique 11 et moteurs 111 et 112) l'équipement 3 se trouve automatiquement sur la fibre optique qui se trouve donc à chaque instant centrée en 0.

Mais le point de sortie de la filière d'enduction 41 se trouve intialement en un point M de coordonnées $x'_0$ et $y'_0$ dans le plan 0'x'y' au lieu d'être au point 0' placé par hypothèse sur la droite 0R. On constate, dans ces conditions, que la longueur de fibre en cours d'enduction n'est pas centrée dans son revêtement, et cela en observant la fibre au moyen du dispositif de visualisation 6.

On agit alors sur les potentiomètres 201 et 202 pour ramener le point M au point 0', c'est-à-dire le dispositif d'enduction au point le plus favorable. Le résultat est obtenu quand on observe deux figures de diffraction symétriques dans le dispositif 6. Si l'on désire un simple préréglage manuel, on peut tendre un fil matérialisant la droite 0R. L'équipement 3 se centre automatiquement sur ce fil. On agit alors sur les potentiomètres 201 et 202 jusqu'à ce que la filière 4 ait son orifice de sortie centré sur le fil.

Au cours de la suite de l'opération de tirage, le système d'asservissement de position du dispositif d'enduction 4 agit de telle sorte que l'on a les relations suivantes entre x et y, coordonnées de l'écart de la fibre par rapport au point 0, centre de mesure de l'équipement 3 d'une part et x', y', coordonnées de l'écart de la fibre par rapport au moint M confondu avec le point 0' situé sur la droite 0R d'autre part :

$$\frac{x'}{x} = \frac{y'}{y} = \frac{h'}{h}$$

où h et h' (figure 3) représentent les longueurs des segments 0R et 0'R.

6

Cette relation résulte de la géométrie de l'installation de tirage.

Le dispositif de mise en oeuvre du procédé de centrage automatique suivant l'invention comprend l'ensemble des moyens décrits ci-avant pour mesurer les coordonnées du déplacement de la fibre par rapport au point d'origine et asservir la position du dispositif d'enduction à la position de la fibre.

REVENDICATIONS

1. Procédé de centrage automatique en cours de tirage d'une fibre optique dans un revêtement de protection, déposé par enduction à l'aide d'un dispositif (4) traversé par la fibre sortant d'une préforme, dans lequel la position du dispositif d'enduction (4) est asservie à la position de la fibre par rapport à un point d'origine (0), caractérisé en ce que le point d'origine (0) est déterminé par des premiers moyens opto-électroniques (6) contrôlant le centrage de la fibre dans son revêtement, en ce que des deuxièmes moyens opto-électroniques (3) permettent de mesurer les coordonnées du déplacement de la fibre par rapport au point d'origine (0) et en ce que des troisièmes moyens électroniques (20) et électromécaniques (40) utilisent ces coordonnées pour déplacer le dispositif d'enduction et assurer ainsi le centrage de la fibre.

2. Procédé suivant la revendication 1, caractérisé en ce que les deuxièmes moyens sont constitués par un équipement de mesure de diamètre de la fibre avant enduction, comportant des moyens d'asservissement de sa propre position par rapport à la fibre.

3. Procédé suivant la revendication 2, caractérisé en ce que les données en x et y des déplacements de la fibre par rapport au point d'origine sont fournies respectivement par deux potentiomètres actionnés par des moteurs électriques faisant partie des moyens d'asservissement de la position de l'équipement de mesure par rapport à la fibre.

4. Procédé suivant la revendication 3, caractérisé en ce que les données en x et en y sont respectivement introduites sur les premières entrées de deux amplificateurs différentiels recevant respectivement sur leurs deuxièmes entrées les données en x' et en y' sur les déplacements du dispositif d'enduction.

5. Dispositif de mise en oeuvre d'un procédé selon la revendication 1, caractérisé en ce qu'il comporte un équipement de mesure de diamètre de la fibre fournissant en outre des données en x et en y sur le déplacement de la fibre par rapport à une position d'origine, et un équipement de contrôle de

8

centrage de la fibre dans son revêtement permettant de déterminer la position d'origine.

0029759

1/2

FIG.1

FIG.3

FIG.2

![Office européen des brevets] **RAPPORT DE RECHERCHE EUROPEENNE**

EP 80 40 1491

## DOCUMENTS CONSIDERES COMME PERTINENTS

| Catégorie | Citation du document avec indication, en cas de besoin, des parties pertinentes | Revendication concernée |
|---|---|---|
| | US - A - 4 124 728 (D. MARCUSE)<br>* Revendications 1,3,7; figures 1,4 *<br>-- | 1,3,4,5 |
| | US - A - 4 042 723 (H.M. PRESBY)<br>* Revendications 1,5,7; figures 1,2,7 *<br>-- | 1 |
| | REVIEW OF ELECTRICAL COMMUNICATION LABORATORIES, vol. 27, no. 1-2, janvier-février 1979<br>S. TAKAHASHI et al.: "Preparation of low-loss multi-component glass-fiber", pages 123-129<br>* Page 124, 125 *<br>-- | 1,2 |
| | US - A - 3 800 388 (M. BORNER)<br>* Colonne 2, lignes 31-40; colonne 3, lignes 43-60 *<br>-- | 3,4 |
| | DE - A - 2 704 140 (LICENTIA)<br>* Page 7, lignes 5-13 *<br>-- | 4,5 |
| A | US - A - 3 652 243 (T.H. JENSEN)<br>* Résumé *<br>-- | 1 |
| A | US - A - 4 046 536 (D.H. SMITHGALL) 1<br>* Revendication 1; figures *<br>---- | 1 |

**CLASSEMENT DE LA DEMANDE (Int. Cl. ³)**

C 03 C 25/02
C 03 B 37/07
G 01 B 11/00
G 02 B 7/26

**DOMAINES TECHNIQUES RECHERCHES (Int. Cl. ³)**

C 03 C 25/02
C 03 B 37/07
G 01 B 11/27
      11/10
      11/26
G 01 M 11/00
G 02 B 7/26

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 18-02-1981 | PFAHLER |